# EUROPEAN PATENT SPECIFICATION

(11) **EP 2 837 293 B1**
(45) Date of publication and mention of the grant of the patent: **28.03.2018**
(21) Application number: 13180570.7
(22) Date of filing: 15.08.2013
(51) Int. Cl.: A23N 15/06, A23B 7/144, F25D 11/00

(54) **Produce ripening chamber**
Produktreifungskammer
Chambre de maturation de production

(43) Date of publication of application: 18.02.2015
(73) Proprietor: Garratt, Alan, West Thurrock Essex RM19 1NZ (GB)
(72) Inventor: Garratt, Alan, West Thurrock, Essex RM19 1NZ (GB); Turbitt, Neil, Rayleigh, Essex SS6 9PP (GB)
(74) Representative: Harrison IP Limited

(56) References cited:
- WO-A1-97/39639
- WO-A2-99/57020
- US-A- 5 438 917
- US-A- 5 475 926
- US-B1- 7 913 513

## Description

### Field of the invention

The present invention relates to a produce ripening chamber that may form part of a stationary installation or of a transport container for distribution of agricultural produce.

### Background of the invention

In order to ripen produce, such as bananas, it is known to place pallets carrying stacks of boxes containing the produce in a ripening chamber in which they are exposed to a re-circulating flow of air at a controlled temperature and containing metered amounts of a ripening agent, usually ethylene. The boxes have holes in their sides, as well as in their bases and lids, to that the air circulating in the ripening chamber passes through the boxes and over the produce.

As well as constructing ripening chambers as rooms in fixed buildings, it has also been proposed in copending European Patent Application No. 13171140.0, to use a transport container for distribution of agricultural produce as a ripening chamber. Such a transport container defines a sealed controlled environment for ripening the produce while in transit and/or while stationed in a depot, and comprises a plurality of fans for circulating air over pallets of the produce, an air conditioning system for maintaining the air circulated by the fans at a desired temperature, and a doping system for maintaining the concentration of a ripening agent in the circulated air at a desired level.

WO97/39639 discloses a ripening room for controlled produce ripening includes side walls. The room receives two rows of boxed produce spaced to define an interstitial volume therebetween. Each row of product is spaced from one of the side walls to define a side airspace therebetween. The room also includes air control units. The side airspaces and the interstitial volume are enclosed to inhibit airflow except through the air control units and through the produce boxes. The air control units transfer air from the interstitial volume to the side airspaces during one time period to form a low pressure plenum in the interstitial volume and high pressure plena in the side airspaces to force air to flow from the side airspaces to the interstitial volume through the produce boxes. The air control units can reverse airflow direction during another time period to reduce temperature variations in the boxed produce.

US 5438917 discloses a method for ripening fruit, such as bananas. A fluid is cooled and guided along the fruit by circulation means conveying the fluid through a load of fruit placed on a pallet, the load being sealed essentially in an airtight manner in the peripheral direction, and the load being placed above or below the circulation means, while the fluid is conveyed through the load essentially in the vertical direction by the circulation means. The circulation means preferably suck the fluid up through the load from the bottom or down through the load from the top, and then guide it along the cooling means, following which, as the result of a pressure difference caused by the circulation means, the fluid is conveyed again along the outside of the load to the bottom or top side, respectively, thereof.

WO9957020 discloses a mobile container adapted for transporting perishable goods that includes a front wall, a rear wall, a pair of side walls extending therebetween so as to define an elongated enclosure having a longitudinal axis and adapted to receive a cargo load. An air recirculation plenum is defined in the enclosure adjacent to the front wall. A refrigeration system is in fluid communication with the air recirculation plenum and is adapted to induct air at a first temperature and to exhaust air at a second temperature. A pair of air delivery plenums extend from the bulkhead along the length of the enclosure parallel to the longitudinal axis. Each of the pair of air delivery plenums is defined by a corresponding one of the pair of side walls and a plenum wall disposed spaced from the corresponding side wall and extending from the upper margins of the enclosure such that the plenum wall is adapted to be coextensive and in abutting contact with a portion of the cargo load. The container also includes a source of pressurized air having an inlet in fluid communication with the exhausted air from the refrigeration system and an outlet in fluid communication with the pair of air delivery plenums. A return air plenum is defined between the air delivery plenums such that the cool air is supplied under pressure along the longitudinal length of the enclosure parallel to and adjacent the pair of side walls and then flows through the cargo load in a direction substantially transverse to the longitudinal axis into the return air plenum after which the air flows substantially parallel to the longitudinal axis back to the air recirculation plenum.

Known ripening chambers, be they mobile or stationary, that circulate air in a plane normal to the length of the chambers, have ceiling mounted ducts and fans for recirculating the air over the pallets. In certain situations, in particular, though not exclusively, if the ripening room is intended to be built into a standard transport container, the chamber has a restricted head height and some of that height is taken up by the ducts carrying the recirculating air.

It has also been proposed to circulate the air by blowing it axially down the length of the chamber but while this allows the full head height of the chamber to be used for accommodating stacked boxes containing the produce, this creates a gradient along the chamber that results in uneven and uncontrolled ripening, which affects the shelf life of the produce.

Pallets carrying produce boxes come in standard sizes and the boxes are either stacked eight high in standard pallets containing forty eight boxes to a pallet, or nine high in so called "high cube" pallets, that support fifty four boxes and need to be transported in larger high cube containers. If a high cube container is used as the basis for a ripening room, the positioning of the ducts and fans on the ceiling restricts the available height for produce boxes and only eight high standard pallets can be accommodated.

### Object of the invention

The present invention seeks therefore to provide a ripening chamber configuration that is less demanding of head height.

### Summary of the invention

According to the present invention, there is provided a ripening chamber comprising an air conditioning system for circulating air through the chamber and regulating the air temperature, and a doping system for regulating the concentration of a ripening agent in the recirculated air, wherein the chamber has a floor, a ceiling and side walls extending between the floor and the ceiling, at least one kerb on the floor for spacing a pallet resting on the floor from a side wall and a duct arranged at the ceiling end of the latter side wall and operative to seal against the side facing the latter side wall of an upper produce box supported by the pallet so as to define an air flow channel between the boxes stacked on the pallet and the side wall, wherein at least an air blower and a heat exchanger of the air conditioning system are housed within the duct to force air at a controlled temperature to circulate through the air flow channel, the produce boxes supported by the pallet and a clearance volume lying between the stack of boxes and the ceiling of the chamber, and wherein no part of a duct extends laterally beyond the associated kerb whereby no part of the duct overlies produce boxes supported on a pallet.

In the invention, no part of the ducts overlies the boxes resting on the pallets, so that the entire height of the chamber is available for the loaded pallets. An unencumbered clearance volume is required not only to allow air circulating through the boxes to return to the ducts while the chamber is in use but also to allow the pallets to be raised using a fork lift truck while being loaded into, and unloaded from the, ripening chamber.

If the pallets have boxes stacked eight high, then the duct will seal against the uppermost boxes, but if the boxes are stacked nine height, the duct will seal against the next to uppermost boxes but will have sufficient height to ensure that the air flow into and out of the duct is not obstructed by the ninth box.

In an embodiment of the invention, the chamber is symmetrical about a central plane and has kerbs adjacent both of the side walls and ducts near the upper ends of opposite side walls.

Conveniently, the chamber is an elongate chamber or rectangular cross section divided along its length into two or more ripening zone, the air conditioning systems in the individual ripening zones being controllable independently of one another.

A partition, which is preferably sealed and thermally insulating, may in some embodiments be provided in the chamber to separate adjacent pairs of ripening zones from one another.

### Brief description of the drawings

The invention will now be described further, by way of example, with reference to the accompanying drawings, in which:
Figure 1 is a section through a ripening chamber of the invention taken in the plane I-I in Figure 3,
Figure 2 is a section similar to that of Figure 1 showing the ripening chamber filled with produce boxes stacked on pallets,
Figure 3 is a section in plane III-III in Figure 1,
Figure 4 is a section in the plane IV-IV in Figure 2,
Figure 5 is a side view of one of the air conditioning ducts in Figure 1,
Figure 6 is a section in the plane VI-VI in Figure 5,
Figure 7 is a section through the duct of Figure 5 in the plane VII-VII in Figure 6,
Figure 8 is a rear view of a transport container designed also to act as a ripening chamber,
Figure 9 is a front view of the container shown in Figure 8 with front doors closed, and
Figure 10 shows the compartments accessible by opening the front doors of the container.

### Detailed description of the embodiment

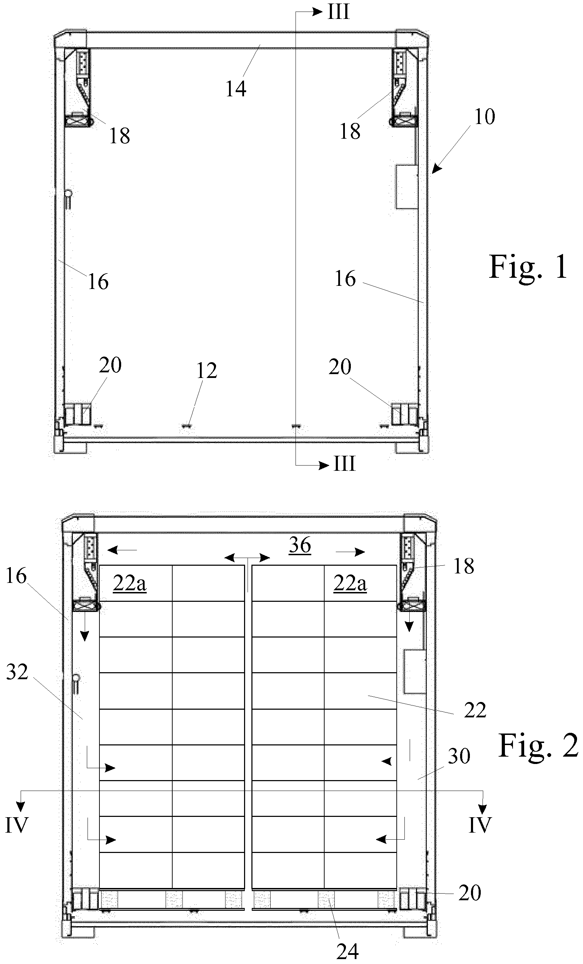

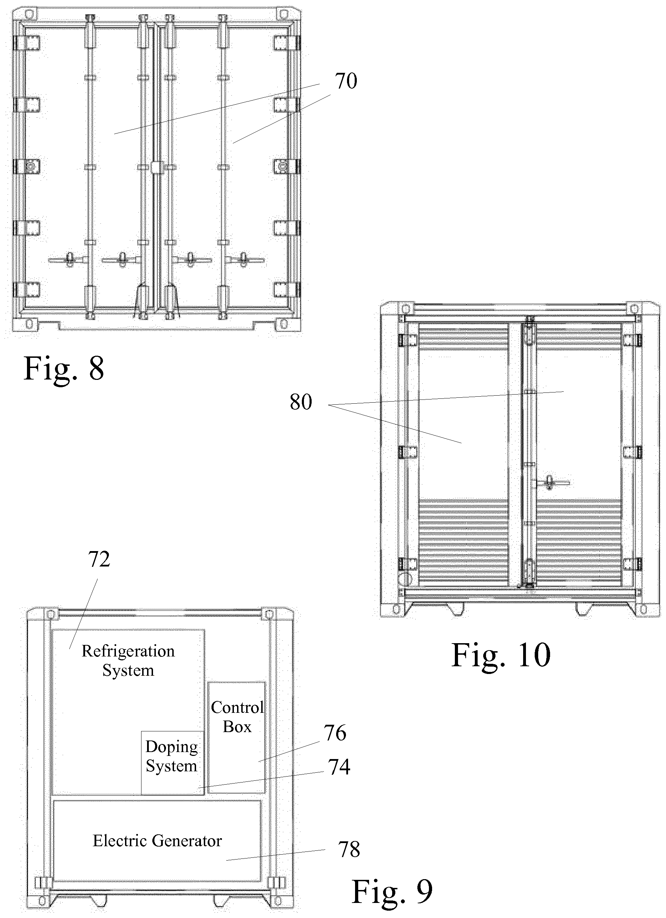

Figure 1 shows a vertical section through an empty ripening chamber 10 formed within the rear part of a transport container. The exterior of the container may be of conventional design with hinged doors 70 at the rear end, shown in Figure 8, to allow access to the ripening chamber. The front end of the container has a refrigeration system 72, a doping system 74, a control box 76 and, if required, an electric generator 78 with its own fuel supply, shown in Figure 9, housed behind front doors 80 shown in Figure 10.

The ripening chamber 10 has a floor 12, a ceiling 14 and two opposing side walls 16 extending over the length of the ripening chamber 10. Two ducts 18 extend along the corners between the side walls 16 and the ceiling 14 and two kerbs 20 are provided in the corners between the floor 12 and the side walls 16 to help positioning pallets. Aside from acting as spacers sealing against the sides of the pallets, the kerbs 20 include grills and controlled dampers to admit fresh air into the air circulation circuit and allow air to escape to the ambient atmosphere.

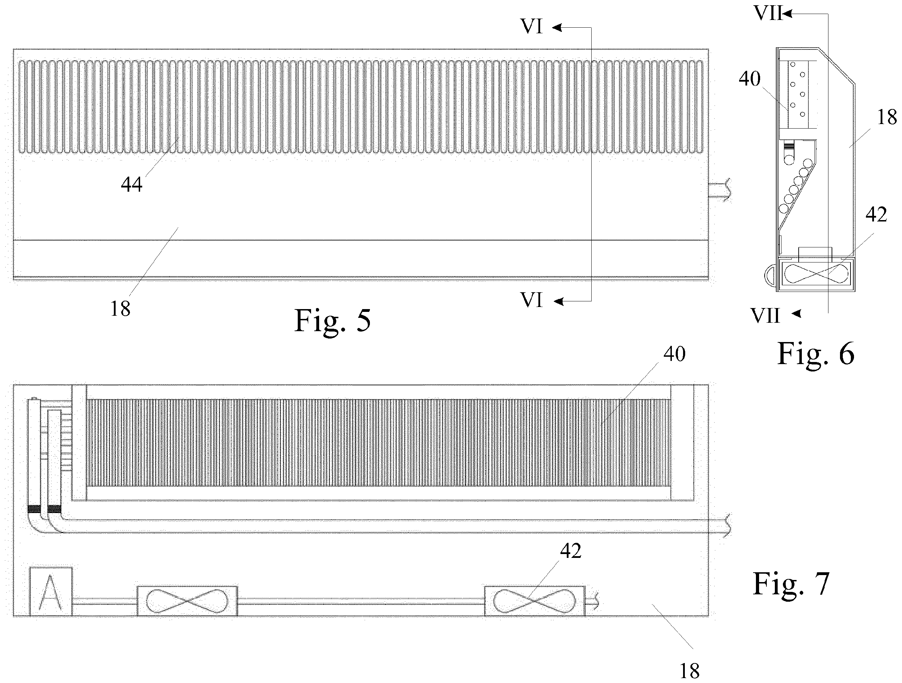

The same ripening chamber 10 is shown in Figure 2 when filled with produce boxes 22, stacked nine high on pallets 24. When the pallets 24 abut the kerbs 20, the sides of the next to uppermost boxes 22a abut and seal against the ducts 18, thereby forming two air circulation channels 30 and 32 between the stacks of boxes 22 and the side walls 16 of the ripening chamber 10. The seal between the boxes and the sides of ducts 18 may be by means of a laterally projecting sealing pads 28 on the ducts 9 (see Figures 5 and 6).

As better shown in Figures 5, 6 and 8, the ducts 18 house heat exchange units 40 and fans 42. The fans 42, as shown in Figure 7, are mechanically connected to one another and to an actuator 43 by shafts 45 that allow the fans to be rotated about the axis of the shafts 45, to reverse the direction of air circulation. While it would alternatively be possible to reverse the direction of rotation of the fan blades electrically, mechanical rotation is preferred as it is more energy efficient.

The heat exchange units 40 are located behind louver-like vents 44 in the side walls of the ducts to communicate with a clearance volume 36 between the boxes 22 stacked on the pallets 20 and the ceiling 14 of the ripening chamber 10. The fans 42 on the other hand communicate through openings in the bottom walls of the ducts 18 with the recirculation channels 30 and 32. Thus, when the fans 42 are operating, air is drawn through the vents 44, and is blown into the circulation channels 30 and 32 by the fans 42 after having first passed through the heat exchanger 40. The air then flows through holes in the sides of the boxes 20 and over the produce to be ripened before returning to the clearance volume 36, thereby completing the circuit, which is represented by arrows in Figure 2.

The reversing of the fans 42 serves to allow the direction of the air flow to be reversed. It is desirable to reverse the direction of air flow periodically in order to achieve more even ripening across the width of the pallet.

The heat exchangers 40 form part of a closed cooling circuit filled with a coolant comprising water and antifreeze. The coolant is itself cooled in a heat exchanger by the refrigeration circuit that is housed in the compartment 22 and that uses propane or other non-toxic liquid as a refrigerant. The refrigeration may be conventional, being formed of a compressor, an expansion valve and an evaporator. The temperature of the coolant flowing through the heat exchanger 40 is regulated to maintain the recirculating air at a desired temperature.

The doping system may comprise an ethylene generator for introducing metered quantities of ethylene into the ripening chamber. When the concentration of the ripening agent is to be reduced, air is discharge to atmosphere from within the ripening chamber and replaced by fresh air. The ripening chamber communicates with the ambient air through the controlled dampers built into in the kerbs 20. To avoid the need for special extraction fans, it is possible to open the dampers on the opposite sides of the ripening chamber and to reverse the direction of circulation in only one half of the chamber. In this way, the fan on one side acts to draw fresh air through the damper in its kerb while the fan on the opposite side expels air through its associated damper.

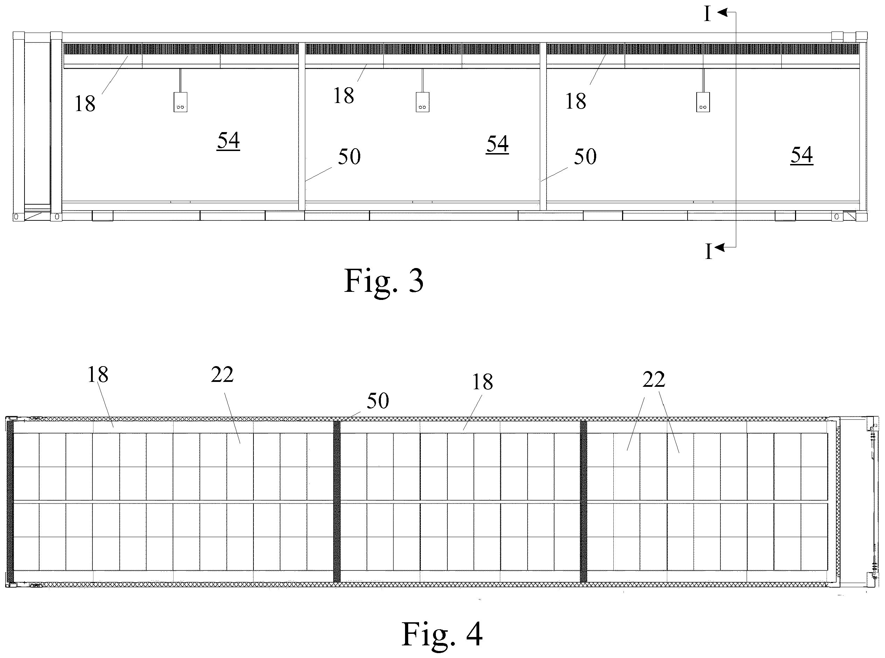

Referring now to Figure 3, it will be seen that over its length the ripening chamber is divided by partitions 50 into three compartments 54 each of which has its own control box 52. The partitions are preferably sealed and thermally insulating so that adjacent compartments 54 may have different temperatures and concentrations of ripening agent. Hence, each partition may comprise a frame and a door hinged at its upper end about a horizontal hinge to stow away when open against the ceiling of the ripening chamber. Alternatively, the partitions may be formed or roller blinds guided in suitable channels to seal against the walls of the chamber.

The control boxes 52 are shown as being wall mounted for ease of operation, but if there is a risk of their interfering with the air flow, then they may alternatively be mounted within the kerbs 20.

The temperature, humidity, and ripening agent concentration in each of the compartments 54 can be set independently so that either different types of produce can be ripened at the same time or the same produce can be ripened at three different rates. In order to achieve this, the coolant circuits and the doping circuits of the three compartments can be regulated independently of one another.

An advantage of the design of the ripening chamber shown in the drawings is that the full height of the chamber is used to accommodate boxes stacked on pallets and no part of the headroom is taken up by conduits or fans, the latter being accommodated entirely within the space available between the sides of the boxes and the adjacent side walls of the container. Though maximising of the headroom within the ripening chamber is of particular importance when it is constructed within a transport container, the same architecture may be used in stationary installations where the head height may also be at a premium.

When implemented as a container, it is important to be able to access the interior of the ripening chamber even when the container is docked at a loading bay. This is enabled in the case of the container shown in Figure 8 by the doors 70 being able to be hinged back to lie flush against the outside of the side walls of the container before the container is reversed into the loading bay. As can be seen in Figure 4, a sealed and thermally insulating partition 50a of suitably modified construction is provided to maintain the rearmost compartment 54 sealed even when the container doors are open.

Though the illustrated embodiment is symmetrical about its centre line, it should be noted that this is not essential as there need only be one kerb and one duct when the chamber is only wide enough to accommodate one pallet.

While there need only be one refrigeration circuit, the coolant circulation through the heat exchangers of the separate compartments may be controlled independently from one another.

It has so far been assumed that the air conditioning system is required only to cool the recirculating air but in certain circumstances it may be required to heat it. While it may be possible to reverse the refrigeration circuit to act as a heater, it is preferred for the heat exchangers 40 to act as heaters by incorporating electrical heating elements into them as this would allow one compartment to be heated while others are being cooled if they are all connected to a common refrigeration circuit.

## Claims

1. A ripening chamber (10) comprising an air conditioning system for circulating air through the chamber and regulating the air temperature and a doping system for regulating the concentration of a ripening agent in the recirculated air, wherein the chamber has a floor (12), a ceiling and side walls extending between the floor and the ceiling (14), at least one kerb (20) on the floor (12) for spacing a pallet (24)resting on the floor (12) from a side wall (16) and a duct (18) arranged at the ceiling end of the latter side wall and operative to seal against the side facing the latter side wall of the uppermost produce box (22a) supported by the pallet (24) so as to define an air flow channel (30) between the boxes (22) stacked on the pallet (24) and the side wall (16), wherein at least an air blower (42) and a heat exchanger (40) of the air conditioning system are housed within the duct (18) to force air at a controlled temperature to circulate through the air flow channel (30), the produce boxes (22) supported by the pallet (24) and a clearance volume (36) lying between the stack of boxes and the ceiling (14) of the chamber, and wherein no part of a duct (18) extends laterally beyond the associated kerb (20) whereby no part of the duct (18) overlies produce boxes (22) supported on a pallet (24).

2. A ripening chamber as claimed in claim 1, wherein the chamber (10) is symmetrical about a central plane and has kerbs (20) adjacent both of the side walls (16) and ducts (18) near the upper ends of opposite side walls.

3. A ripening chamber as claimed in claim 1 or claim 2, wherein the chamber (10) is an elongate chamber of rectangular cross section divided along its length into two or more ripening compartments, the air conditioning systems and doping systems in the individual ripening compartments being controllable independently of one another.

4. A ripening chamber as claimed in claim 3, comprising curtains (50) in the chamber to separate adjacent pairs of ripening compartments from one another.

5. A ripening chamber as claimed in any preceding claim, wherein the air blower (42) is reversible.

6. A ripening chamber as claimed in claim 5, wherein the air blower (42) is a fan that is rotatably mounted within the duct (18) in order to reverse the direction of air flow.

7. A ripening chamber as claimed in any preceding claim, wherein a controlled damper is provided in the kerb to allow air to be admitted into or expelled from the interior of the ripening chamber.

## Patentansprüche

1. Reifekammer (10), umfassend ein Klimatisierungssystem zum Zirkulieren von Luft durch die Kammer und Regulieren der Lufttemperatur und ein Dotierungssystem zum Regulieren der Konzentration eines Reifemittels in der Umluft, wobei die Kammer einen Boden (12), eine Decke und Seitenwände, die sich zwischen dem Boden und der Decke (14) erstrecken, mindestens eine Kante (20) an dem Boden (12), um eine Palette (24), die auf dem Boden (12) liegt, von einer Seitenwand (16) zu beabstanden, und einen Kanal (18) aufweist, der an dem Deckenende der letzteren Seitenwand angeordnet und bedienbar ist, um die Seite, welche der letzteren Seitenwand der obersten Produktbox (22a) gestützt durch die Palette zugewandt ist, abzudichten, um einen Luftstromkanal (30) zwischen den auf die Palette (24) gestapelten Boxen (22) und der Seitenwand (16) zu definieren, wobei mindestens ein Luftgebläse (42) und ein Wärmetauscher (40) des Klimatisierungssystems innerhalb des Kanals (18) untergebracht sind, um Luft bei einer kontrollierten Temperatur zu zwingen, durch den Luftstromkanal (30), die durch die Palette (24) gestützten Produktboxen (22) und einen zwischen dem Stapel an Boxen und der Decke (14) der Kammer liegenden Totraum (36) zu zirkulieren, und wobei sich kein Teil eines Kanals (18) seitlich über die zugehörige Kante (20) hinaus erstreckt, wodurch kein Teil des Kanals (18) Produktboxen (22), die auf einer Palette (24) gestützt sind, überlagert.

2. Reifekammer nach Anspruch 1, wobei die Kammer (10) symmetrisch um eine Mittelebene ist und Kanten (20) sowohl neben den Seitenwänden (16) als auch den Kanälen (18) in der Nähe der oberen Enden gegenüberliegender Seitenwände aufweist.

3. Reifekammer nach Anspruch 1 oder Anspruch 2, wobei die Kammer (10) eine längliche Kammer mit rechteckigem Querschnitt ist, die entlang ihrer Länge in zwei oder mehr Reifefächer geteilt ist, wobei die Klimatisierungssysteme und Dotierungssysteme in den einzelnen Reifefächern unabhängig voneinander steuerbar sind.

4. Reifekammer nach Anspruch 3, umfassend Vorhänge (50) in der Kammer, um benachbarte Paare an Reifefächern voneinander zu trennen.

5. Reifekammer nach einem vorhergehenden Anspruch, wobei das Luftgebläse (42) umkehrbar ist.

6. Reifekammer nach Anspruch 5, wobei das Luftgebläse (42) ein Lüfter ist, der drehbar innerhalb des Kanals (18) angebracht ist, um die Richtung des Luftstroms umzukehren.

7. Reifekammer nach einem vorhergehenden Anspruch, wobei ein kontrollierter Dämpfer in der Kante bereitgestellt ist, um zu ermöglichen, dass Luft in den Innenraum der Reifekammer gelassen oder aus diesem ausgestoßen wird.

## Revendications

1. Chambre de maturation (10) comprenant une installation de climatisation pour la circulation d'air dans la chambre, et la régulation de la température de l'air, et un système de dopage pour la régulation de la concentration d'un agent de maturation dans l'air recyclé, la chambre possédant un plancher (12), un plafond et des parois latérales s'étendant du plancher au plafond (14), au moins une bordure (20) sur le plancher (12) pour espacer une palette (24), posée sur le plancher (12), d'une paroi latérale (16), et un conduit (18) agencé côté plafond de la dernière paroi latérale, servant à assurer une fermeture étanche contre le côté situé face à la dernière paroi latérale de la boîte de produits supérieure (22a) supportée par la palette (24), de façon à définir un canal d'écoulement d'air (30) entre les boîtes (22) empilées sur la palette (24) et la paroi latérale (16), au moins une soufflante d'air (42) et un échangeur de chaleur (40) de l'installation de climatisation étant placés au sein du conduit (18) de façon à forcer de l'air à une température contrôlée pour sa circulation dans le canal d'écoulement d'air (30), les boîtes de produit (22) supportées par la palette (24), et un volume de dégagement (36) situé entre la pile de boîtes et le plafond (14) de la chambre, et aucune partie d'un conduit (18) n'étant déployée latéralement au-delà de la bordure connexe (20), de sorte qu'aucune partie du conduit (18) ne recouvre des boîtes de produit (22) supportées par une palette (24).

2. Chambre de maturation selon la revendication 1, la chambre (10) étant symétrique autour d'un plan central, et possédant des trottoirs (20) adjacentes à la fois aux parois latérales (16) et à des conduits (18) à proximité des extrémités supérieures des parois latérales opposées.

3. Chambre de maturation selon la revendication 1 ou la revendication 2, la chambre (10) étant une chambre de forme allongée à section transversale rectangulaire, subdivisée dans sa longueur en deux ou plusieurs compartiments de maturation, les installations de climatisation et les systèmes de dopage dans les compartiments de maturation étant contrôlables indépendamment l'un de l'autre.

4. Chambre de maturation selon la revendication 3, comprenant des rideaux (50) dans la chambre pour séparer des paires adjacentes de compartiments de maturation l'un de l'autre.

5. Chambre de maturation selon une quelconque des revendications précédentes, la soufflante d'air (42) étant réversible.

6. Chambre de maturation selon la revendication 5, la soufflante d'air (42) étant un ventilateur monté de façon rotative au sein du conduit (18) afin d'inverser le sens du débit d'air.

7. Chambre de maturation selon une quelconque des revendications précédentes, un amortisseur contrôlé étant prévu dans le trottoir pour permettre l'introduction d'air à l'intérieur de la chambre de maturation ou son refoulement hors de celle-ci.
